# DEMANDE DE BREVET EUROPEEN

(11) **EP 0 595 689 A1**
(43) Date de publication de la demande: **04.05.1994**
(21) Numéro de dépôt: 93402584.2
(22) Date de dépôt: 21.10.1993
(51) Int. Cl.: B01D 65/02

(54) **Procédé de décolmatage automatique d'une unité d'ultrafiltration ou de microfiltration et installation mettant en oeuvre le procédé**

(30) Priorité: 26.10.1992 FR 9213055
(71) Demandeur: COMMISSARIAT A L'ENERGIE ATOMIQUE, F-75015 Paris (FR)
(72) Inventeur: Barnier, Henri, Route de Cézanne, F-13100 Aix en Provence (FR); Givaudan, Jean-Gabriel, F-04220 Sainte-Tulle (FR); Bardou, Jean-Luc, F-84120 Pertuis (FR); Lankar, Frédéric, F-60260 Lamorlaye (FR)
(74) Mandataire: Dubois-Chabert, Guy

(57) **Abrégé**

Installation de décolmatage automatique d'une unité d'ultrafiltration ou de microfiltration comportant un module composé d'une enceinte cylindrique allongée (22), munie à ses extrémités d'un distributeur d'entrée (24) et d'un collecteur de sortie (26) pour l'écoulement sous la pression P₁ de la phase liquide à filtrer et d'au moins une membrane filtrante (28) également de forme cylindrique, agencée axialement à l'enceinte (22) et délimitant avec elle un volume aval (30) destiné à l'écoulement du filtrat, ce volume aval (30) communiquant par deux ouvertures, l'une la sortie aval (32) et l'autre l'entrée aval (34) avec l'extérieur de l'enceinte, caractérisée en ce qu'elle comporte un circuit de filtrat (36) établi depuis la sortie aval (34) vers l'entrée aval (32), ce circuit (36) étant muni en série d'une pompe (38) à pression modulée périodiquement de façon à ce que l'amplitude maximale de cette pression soit légèrement supérieure à la pression P₁, la canalisation de récupération (42) du filtrat produit par l'installation étant directement branchée sur ce circuit de filtrat (36).

## Description

La présente invention se rapporte d'une manière générale aux techniques d'ultrafiltration ou de microfiltration par lesquelles une phase fluide chargée de particules solides à éliminer est amenée sous pression sur la face amont d'une membrane filtrante qui retient les particules solides et laisse passer sur sa face aval, le filtrat résultant de l'opération. D'une manière plus précise encore, la présente invention se rapporte aux problèmes du décolmatage de telles membranes filtrantes dont on sait qu'elles parviennent toujours au bout d'un temps plus ou moins long à s'obstruer par accumulation de certaines des particules solides qui s'agglomèrent de façon irréversible dans les pores de la membrane.

Elle s'applique également, de façon plus particulière, aux installations d'ultra-filtration ou de micro filtration tangentielle, c'est-à-dire dans lesquelles la phase liquide à épurer se déplace parallèlement à la surface amont de la membrane filtrante.

En ultrafiltration ou microfiltration tangentielle, un fluide est filtré sur une membrane poreuse sous l'action d'une pression dite "de transfert" et dans des conditions où le fluide est en écoulement tangentiel par rapport à la surface de la membrane.

Dans ces conditions, un colmatage de la membrane poreuse est observé quel que soit le fluide, avec une vitesse plus ou moins grande pour éviter, ou au moins retarder et limiter le colmatage de la membrane, un des procédés utilisés consiste à soumettre le fluide à filtrer à une pression de transfert pulsée. Au cours des fréquences de pulsation, la pression de transfert passe par un maximum et un minimum, avec une absence de filtration au minimum de pression et, en principe, une évacuation et un entraînement de la matière solide, déposée sur la surface de la membrane, par le fluide à filtrer (en circulation).

Mais, la mise en oeuvre de dispositifs (pompe à piston, électrovanne...) pour obtenir une pression de transfert pulsée dans le liquide à filtrer chargé de suspensions solides pose des problèmes divers : (grippage, usure prématurée des dispositifs mécaniques...).

La présente invention a précisément pour objet un procédé et une installation qui permettent à l'aide de moyens pour la mise en oeuvre de s'affranchir des inconvénients précédemment rappelés.

Ce procédé de décolmatage automatique d'une unité de filtration dans laquelle une phase liquide contenant des particules solides à éliminer est amenée sous une pression P₁ au contact d'une membrane filtrante, la membrane filtrante étant balayée par la phase liquide à filtrer qui s'écoule de façon tangentielle depuis un distributeur d'entrée jusqu'à un collecteur de sortie, se caractérise en ce que l'on prélève une fraction du filtrat à la sortie de la membrane située en aval par rapport à la direction d'écoulement de la phase liquide, l'on soumet cette fraction de filtrat à une pression modulée de façon périodique à une fréquence comprise entre 0,05 Hz et 5 Hz et dont l'amplitude maximale est légèrement supérieure à la pression P₁ et l'on réinjecte cette fraction de filtrat à la sortie de la membrane située en amont par rapport à la direction d'écoulement de la phase liquide.

Comme on le voit de ce qui précède, l'invention consiste à provoquer par inversion des pressions de part et d'autre de la membrane pendant un temps très court de chaque période de pulsation de la pression modulée, des renversements du sens de l'écoulement de la phase liquide au travers de la membrane qui sont suffisants pour extraire les produits de colmatage et les renvoyer dans la circulation générale du fluide à filtrer. Ce régime pulsé, introduit dans le filtrat issu de la membrane, permet de maintenir un écoulement quasi continu du filtrat au travers de la membrane et réalise le décolmatage souhaité de celle-ci sans qu'il soit nécessaire d'interrompre le processus de filtration.

On établit donc entre la sortie et l'entrée aval de la membrane, une circulation externe dérivée de filtrat dans laquelle précisément on introduit la pression modulée de façon périodique précédemment définie. Cette disposition permet d'uniformiser autant que possible l'action de la pression auxiliaire modulée de façon périodique sur toute la face de la membrane.

Selon le procédé objet de l'invention, la périodicité imposée à la modulation de pression injectée dans le filtrat au contact de la membrane assure l'automaticité du procédé de décolmatage puisqu'il intervient de façon continue au cours de phases très rapides intercalées entre les périodes de filtration pure. L'originalité et l'intérêt du procédé objet de l'invention consistent précisément à effectuer en permanence et sans interruption du fonctionnement de l'appareil, la filtration et le décolmatage et ce selon des séquences périodiques mais dans lesquelles par le choix judicieux de l'amplitude maximale de la pression par rapport à la pression P₁ de circulation de la phase liquide à épurer, on réalise pendant un temps majoritaire de chaque période une filtration suivie d'un temps bref de décolmatage.

L'invention a également pour objet une installation de décolmatage automatique qui permet la mise en oeuvre du procédé précédent.

Cette installation de décolmatage automatique d'une unité d'ultrafiltration ou de microfiltration comportant un module composé d'une enceinte cylindrique allongée, munie à ses extrémités d'un distributeur d'entrée et d'un collecteur de sortie pour l'écoulement sous la pression P₁ de la phase liquide à filtrer et d'au moins une membrane filtrante également de forme cylindrique, agencée axialement à l'enceinte et délimitant avec elle un volumee aval destiné à l'écoulement du filtrat, ce volume aval communiquant par deux ouvertures, l'une la sortie aval et l'autre l'entrée aval, avec l'extérieur de l'enceinte, se caractérise en ce qu'elle comporte un circuit de filtrat établi depuis la sortie aval vers l'entrée aval, ce circuit étant monté en série avec une pompe à pression modulée périodiquement de façon à ce que l'amplitude maximale de cette pression soit légèrement supérieure à la pression P₁, la canalisation de récupération du filtrat produit par l'installation étant directement branchée sur ce circuit de filtrat.

Enfin, selon une caractéristique intéressante de l'installation de décolmatage automatique objet de l'invention, la canalisation de récupération du filtrat est équipée d'une vanne qui permet de régler le débit de sortie du filtrat et, de façon concomitante, les pressions extrêmes dans le filtrat par rapport à la valeur P₁.

C'est donc comme on le voit par réglage du débit de cette vanne de sortie en rapport avec les pressions maximale et minimale de la pompe à pression modulée ainsi que de la fréquence de modulation de celle-ci que l'on règle les différents paramètres de l'installation aux valeurs souhaitées dans chaque cas particulier.

De toute façon l'invention sera mieux comprise en se référant à la description qui suit de deux modes de mises en oeuvre de l'installation de décolmatage automatique, description qui sera faite à titre illustratif et non limitatif en se référant aux figures 1 à 3 ci-jointes sur lesquelles :
- la figure 1 montre le schéma des pressions en fonction du temps dans le filtrat ;
- la figure 2 montre un exemple très général de réalisation d'une installation de décolmatage d'un module ;
- la figure 3 montre un exemple particulier d'une installation de décolmatage automatique à deux modules.

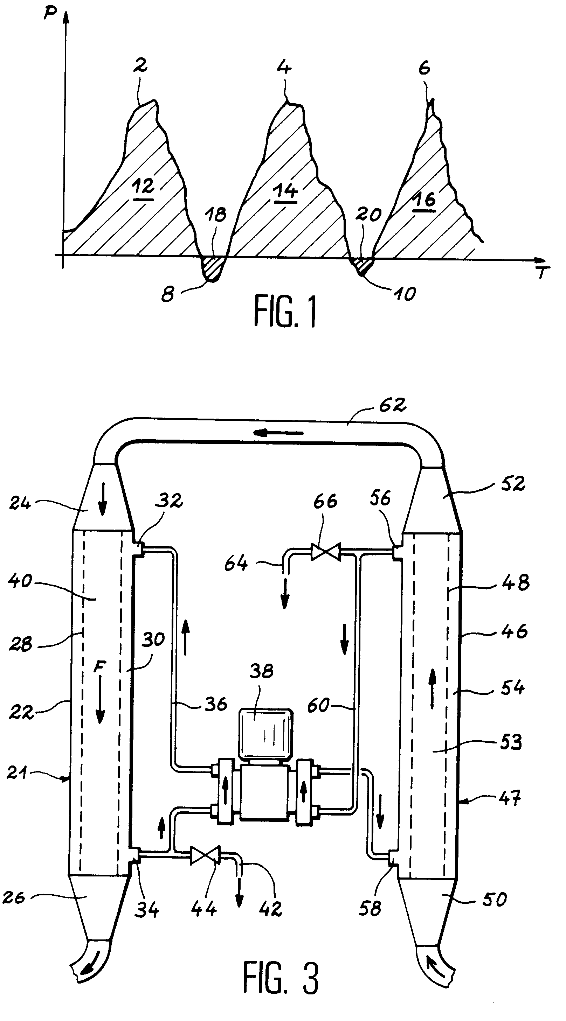

La figure 1 représente la pression effective exercée sur la membrane en cours de fonctionnement, cette pression résultant de la pression P₁ de transfert de la phase liquide à filtrer, diminuée de la pression périodique modulée appliquée au filtrat. Comme indiqué déjà précédemment, cette pression représentée ici en fonction du temps est modulée selon une fréquence qui peut s'étendre par exemple de 0,05 Hz à 5 Hz. Elle passe par une série de maximum 2, 4, 6 et de minimum 8, 10, représentés sur la figure. La valeur zéro de cette pression telle qu'elle est représentée sur la courbe de la figure 1, correspond à l'équilibre de part et d'autre des phases amont et aval de la membrane de filtration. On voit donc que les zones 12, 14 et 16 délimitées par cette courbe et l'axe du temps, représentent des périodes d'excès de la pression de transfert par rapport à la pression dans le filtrat, c'est-à-dire à des époques où la filtration à proprement parler se produit normalement. En revanche, les surfaces hachurées 18 et 20, comprises entre les minimums de la courbe et le même axe des temps, correspondent à des moments où la pression dans le filtrat est plus élevée que la pression de transfert du fluide à filtrer, c'est-à-dire à des époques de rétro-filtration où le liquide traverse la membrane en sens inverse de celui de la filtration normale provoquant ainsi le décolmatage des pores de la membrane. Conformément à l'invention, c'est par un choix judicieux des amplitudes maximales 2, 4, 6 et minimales 8, 10 de la courbe de la figure 1 que l'on fixe les rapports entre les temps de filtration 12, 14, 16 et les temps de décolmatage 18 et 20.

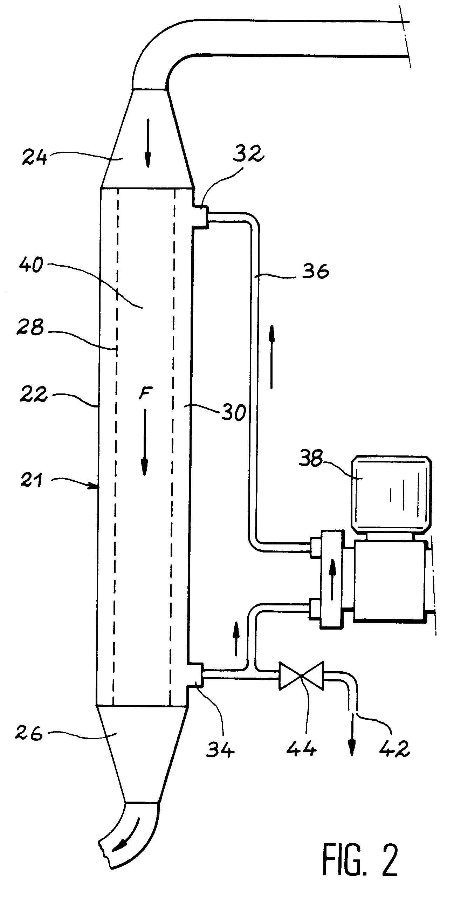

Sur la figure 2, on a représenté une unité de filtration composée d'un module et comportant la mise en oeuvre du procédé de décolmatage automatique, objet de l'invention.

Sur cette figure 2, le module de filtration est référencé 21 et se compose d'une enceinte cylindrique allongée 22 munie à ses deux extrémités respectivement d'un distributeur d'entrée 24 et d'un collecteur de sortie 26 pour le liquide à filtrer qui circule dans l'installation sous la pression de transfert P₁. A l'intérieur de l'enceinte 22 se trouve située une membrane filtrante 28 également de forme cylindrique et agencée coaxialement à l'enceinte 22. Cette disposition ménage ainsi entre l'enceinte 22 et la membrane 28 un volume aval 30 qui comporte deux ouvertures, l'une 32 en entrée par rapport au sens de circulation du fluide à filtrer indiqué par la flèche F sur le schéma et l'autre 34 en sortie de ce même volume aval 30. Conformément à l'invention, une conduite de dérivation 36 est établie entre la sortie aval 34 et l'entrée aval 32 du volume annulaire 30. Cette dérivation 36 est montée en série avec une pompe à pression 38 à pression modulée périodiquement qui injecte par conséquent dans cette dérivation 36 des variations de pression dont l'amplitude maximale est légèrement supérieure à la pression P₁ de circulation du fluide à filtrer le long de la membrane 28 dans le volume amont 40 du module 21.

On réalise ainsi conformément à l'invention le décolmatage automatique de la membrane 28 en faisant alterner selon une fréquence déterminée des périodes longues utilisées pour la filtration suivies de périodes courtes utilisées pour le décolmatage.

Entre la sortie 34 du volume 30 et l'entrée de la pompe 38 est branchée la canalisation 42 de récupération du filtrat ; cette canalisation 42 est équipée d'une vanne 44 de réglage du débit dans le circuit 36.

Sur la figure 3, on a représenté une installation de décolmatage automatique conforme à l'invention et présentant cette fois deux modules au lieu d'un. Le premier module 47 est composé de son enveloppe cylindrique 46, de sa membrane intérieure 48 définissant entre les deux le volume aval 54 du filtrat. Le fluide à filtrer est amené dans le volume intérieur amont 53 de la membrane 48 par le distributeur 50, et est récupéré à la sortie de ce premier module 47 par le collecteur 52, puis véhiculé par la conduite 62 jusqu'au distributeur 24 du deuxième module 21. On voit donc que les deux modules sont placés en série en ce qui concerne la circulation du liquide à filtrer.

L'enceinte cylindrique 46 du premier module comporte respectivement un branchement de sortie 56 et un branchement d'entrée 58 du filtrat qui sont reliés par une dérivation 60 laquelle est l'équivalent strict de la dérivation 36 du deuxième module. Dans le cas particulier de l'installation représentée sur la figure 3, c'est la même pompe périodique 38 qui, placée en série dans la dérivation précédente 60, injecte dans le volume aval 54, du filtrat la pression modulée nécessaire aux phases de décolmatage du filtre. Enfin, le montage du premier module étant en tous points identique à celui du deuxième, la dérivation 60 comporte également une canalisation de sortie 64 pour le filtrat, canalisation sur laquelle une vanne 66, homologue de la vanne 44 pour le deuxième module, permet les réglages de débit du liquide filtré et des valeurs extrêmes de la pression injectée par la pompe 38 dans la dérivation 60.

L'exemple qui vient d'être décrit en se référant à la figure 3 est destiné surtout à faire comprendre que l'on peut concevoir à volonté les installations de filtration comportant un certain nombre de modules en série, l'installation de la figure 2 n'étant par conséquent qu'un exemple donné à titre non limitatif.

Les modules 21 et 47 représentés sur les figures 2 et 3 ne comportent, chacun, qu'une seule membrane cylindrique coaxiale respectivement aux enceintes 22 et 46. Cependant, sans sortir du cadre de l'invention, chaque module 21, 47 peut renfermer une membrane cylindrique désaxée par rapport à l'axe de l'enceinte 22, 46 ; ou encore renfermer plusieurs membranes regroupées en faisceau.

## Revendications

1. Procédé de décolmatage automatique d'une unité de filtration dans laquelle une phase liquide contenant des particules solides à éliminer est amenée sous une pression P₁ au contact d'une membrane filtrante, la membrane filtrante étant balayée par la phase liquide à filtrer qui s'écoule de façon tangentielle depuis un distributeur d'entrée jusqu'à un collecteur de sortie, caractérisé en ce que l'on prélève une fraction du filtrat à la sortie de la membrane située en aval par rapport à la direction d'écoulement de la phase liquide, l'on soumet cette fraction de filtrat à une pression modulée de façon périodique à une fréquence comprise entre 0,05 Hz et 5 Hz et dont l'amplitude maximale est légèrement supérieure à la pression P₁ et l'on réinjecte cette fraction de filtrat à la sortie de la membrane située en amont par rapport à la direction d'écoulement de la phase liquide.

2. Installation de décolmatage automatique d'une unité d'ultrafiltration ou de microfiltration comportant un module composé d'une enceinte cylindrique allongée (22), munie à ses extrémités d'un distributeur d'entrée (24) et d'un collecteur de sortie (26) pour l'écoulement sur la pression P₁ de la phase liquide à filtrer et d'au moins une membrane filtrante (28) également de forme cylindrique, agencée axialement à l'enceinte (22) et délimitant avec elle un volume aval (30) destiné à l'écoulement du filtrat, ce volume aval (30) communiquant par deux ouvertures, l'une la sortie aval (32) et l'autre l'entrée aval (34) avec l'extérieur de l'enceinte, caractérisée en ce qu'elle comporte un circuit de filtrat (36) établi depuis la sortie aval (34) vers l'entrée aval (32), ce circuit (36) étant muni en série d'une pompe (38) à pression modulée périodiquement de façon à ce que l'amplitude maximale de cette pression soit légèrement supérieure à la pression P₁, la canalisation de récupération (42) du filtrat produit par l'installation étant directement branchée sur ce circuit de filtrat (36).

3. Installation de décolmatage automatique selon la revendication **2**, caractérisée en ce que la canalisation de récupération du filtrat (42) est équipée d'une vanne (44) qui permet de régler le débit de sortie du filtrat et, de façon concomitante, les pressions extrêmes dans le filtrat par rapport à la valeur P₁.
